# EUROPÄISCHE PATENTANMELDUNG

(11) **EP 4 600 118 A1**
(43) Veröffentlichungstag der Anmeldung: **13.08.2025**
(21) Anmeldenummer: 25150633.3
(22) Anmeldetag: 08.01.2025
(51) Int. Cl.: B62D 15/02, B60W 40/08

(54) **VERFAHREN UND VORRICHTUNG ZUM ERKENNEN EINES HANDS-OFF-ZUSTANDS AN EINEM LENKRAD EINES FAHRZEUGS**

(30) Priorität: 06.02.2024 DE 102024201064
(71) Anmelder: Volkswagen Aktiengesellschaft, 38440 Wolfsburg (DE)
(72) Erfinder: Stahl, Felix, 38440 Wolfsburg (DE); Kaste, Dr. Jonas, 38440 Wolfsburg (DE); Kallmeyer, Dr.-Ing. Felix, 38440 Wolfsburg (DE)

(57) **Zusammenfassung**

Die Erfindung betrifft ein Verfahren zum Erkennen eines Hands-Off-Zustands (6) an einem Lenkrad (51) eines Fahrzeugs (50), wobei mindestens eine Lenkungsgröße (4) an dem Lenkrad (51) erfasst wird, wobei die erfasste mindestens eine Lenkungsgröße (4) einem trainierten Maschinenlernmodell (5) als Eingangsdaten zugeführt wird, wobei das Maschinenlernmodell (5) darauf trainiert ist, einen Hands-Off-Zustand (6) ausgehend von zumindest der erfassten mindestens einen Lenkungsgröße (4) zu erkennen und eine zugehörige Zustandsgröße als Ausgangsdaten (20) auszugeben, wobei das trainierte Maschinenlernmodell (5) ein trainiertes Hauptmodell (5-1) und ein dem Hauptmodell (5-1) vorgeschaltetes trainiertes Adaptermodell (5-2) umfasst, wobei das Hauptmodell (5-1) darauf trainiert ist, ausgehend von allgemeinen Eingangsdaten (10) den Hands-Off-Zustand (6) zu erkennen, und wobei das Adaptermodell (5-2) darauf trainiert ist, ausgehend von speziellen Eingangsdaten (11) die allgemeinen Eingangsdaten (10) zu bestimmen. Ferner betrifft die Erfindung eine Vorrichtung (1) zum Erkennen eines Hands-Off-Zustands (6) an einem Lenkrad (51).

## Beschreibung

Die Erfindung betrifft ein Verfahren und eine Vorrichtung zum Erkennen eines Hands-Off-Zustands an einem Lenkrad eines Fahrzeugs.

In Fahrzeugen werden zur Überwachung einer Fahreraktivität Sensoren, wie z.B. ein kapazitives Lenkrad, eingesetzt. Ein solches Lenkrad erkennt eine Berührung oder Nichtberührung ("Hands-Off") des Lenkrades durch den Fahrer mittels eines kapazitiven Sensors. Ein Ergebnis wird nutzenden Funktionen, wie z.B. einem Längs- und/oder Querführungsassistenzsystem, übermittelt. Aus der Berührung der Hände am Lenkrad kann auf eine Fahreraktivität und auf eine Aufmerksamkeit des Fahrers geschlossen werden. Es kann beispielsweise vorgesehen sein, den Fahrer darauf hinzuweisen, die Hände an das Lenkrad zu legen, sofern erkannt wird, dass die Hände während einer Querführung für eine vorgegebene Zeit nicht am Lenkrad waren.

Um zusätzliche Kosten für einen kapazitiven Sensor im Lenkrad zu sparen, ist es bekannt, die Fahreraktivität mit Hilfe von Maschinenlernmodellen, insbesondere mit Hilfe von künstlichen Neuronalen Netzen, ausgehend von einem am Lenkrad erfassten Drehmoment (Handmoment) zu überwachen. Ein solches Verfahren ist beispielsweise aus der DE 10 2019 211 016 A1 bekannt.

Eine große Herausforderung von lenkmomentbasierten Erkennungen besteht darin, im gemessenen (verrauschten) Lenkmoment, das vom Fahrer induzierte Lenkmoment zu identifizieren. Viele Faktoren können zu einem verrauschten Lenkmoment führen, insbesondere eine Position des Sensors (dieser bildet in der Regel einen Teil des Lenkgetriebes bzw. der Lenkunterstützung, wodurch über die Elastizitäten der Lenksäule in Verbindung mit dem Lenkrad ein drehschwingungsfähiges System entsteht, dessen Eigendynamik die präzise Messung des durch den Fahrer induzierten Moments erschwert); eine Stärke der Reibung im Lenksystem; eine Rückanregung aus der Straße durch Unebenheiten; ein Eigengewicht des Lenkrads / des Lenksystems; eine Vibration des Lenkrads durch eine Assistenzfunktion (z.B. durch eine haptische Rückkopplung beim Verlassen der Fahrbahn).

Zudem können sich die Charakteristiken (die zur Hands-Off-Erkennung genutzt werden) des gemessen Lenkmoments durch äußere Einflüsse verändern, z.B. durch eine Temperatur, einen Beladungszustand des Fahrzeugs, das Vorhandensein eines Anhängers, einen Reifentyp und/oder einen Zustand des Reifens, eine Lenksystemveränderung über die Lebensdauer, eine Fahrbahn-Steigung/Neigung/Schräglage usw.

Ferner haben insbesondere auch Fahrzeugeigenschaften einen Einfluss auf die Hands-Off-Erkennung. Daraus folgt, dass z.B. unterschiedliche Fahrzeugplattformen, aber auch Fahrzeughüte (z.B. Allrad/Frontantrieb) unterschiedliche Charakteristiken aufweisen, d.h. unterschiedliche Muster durch das Maschinenlernmodell zu erlernen sind. Es wird für jede Fahrzeugklasse bzw. jeden Fahrzeughut ein eigenes Maschinenlernmodell trainiert. Hierzu müssen entsprechende Trainingsdaten in großem Umfang erzeugt und verwendet werden. Dies führt zu großem Aufwand und Kosten.

Der Erfindung liegt die Aufgabe zu Grunde, ein Verfahren und eine Vorrichtung zum Erkennen eines Hands-Off-Zustands an einem Lenkrad zu verbessern.

Die Aufgabe wird erfindungsgemäß durch ein Verfahren mit den Merkmalen des Patentanspruchs 1 und eine Vorrichtung mit den Merkmalen des Patentanspruchs 8 gelöst. Vorteilhafte Ausgestaltungen der Erfindung ergeben sich aus den Unteransprüchen.

Insbesondere wird ein Verfahren zum Erkennen eines Hands-Off-Zustands an einem Lenkrad eines Fahrzeugs zur Verfügung gestellt, wobei mindestens eine Lenkungsgröße an dem Lenkrad erfasst wird, wobei die erfasste mindestens eine Lenkungsgröße einem trainierten Maschinenlernmodell als Eingangsdaten zugeführt wird, wobei das Maschinenlernmodell darauf trainiert ist, einen Hands-Off-Zustand ausgehend von zumindest der erfassten mindestens einen Lenkungsgröße zu erkennen und eine zugehörige Zustandsgröße als Ausgangsdaten auszugeben, wobei das trainierte Maschinenlernmodell ein trainiertes Hauptmodell und ein dem Hauptmodell vorgeschaltetes trainiertes Adaptermodell umfasst, wobei das Hauptmodell darauf trainiert ist, ausgehend von allgemeinen Eingangsdaten den Hands-Off-Zustand zu erkennen, und wobei das Adaptermodell darauf trainiert ist, ausgehend von speziellen Eingangsdaten die allgemeinen Eingangsdaten zu bestimmen.

Ferner wird insbesondere eine Vorrichtung zum Erkennen eines Hands-Off-Zustands an einem Lenkrad geschaffen, umfassend mindestens einen Lenkungsgrößensensor, der eingerichtet ist zum Erfassen von mindestens einer Lenkungsgröße an dem Lenkrad, und eine Datenverarbeitungseinrichtung, wobei die Datenverarbeitungseinrichtung dazu eingerichtet ist, die erfasste mindestens eine Lenkungsgröße zu erhalten, ein trainiertes Maschinenlernmodell bereitzustellen und die erfasste mindestens eine Lenkungsgröße dem trainierten Maschinenlernmodell als Eingangsdaten zuzuführen, wobei das Maschinenlernmodell darauf trainiert ist, einen Hands-Off-Zustand ausgehend von zumindest der erfassten mindestens einen Lenkungsgröße zu erkennen und eine zugehörige Zustandsinformation als Ausgangsdaten auszugeben, wobei das trainierte Maschinenlernmodell ein trainiertes Hauptmodell und ein dem Hauptmodell vorgeschaltetes trainiertes Adaptermodell umfasst, wobei das Hauptmodell darauf trainiert ist, ausgehend von allgemeinen Eingangsdaten den Hands-Off-Zustand zu erkennen, und wobei das Adaptermodell darauf trainiert ist, ausgehend von speziellen Eingangsdaten die allgemeinen Eingangsdaten zu bestimmen.

Das Verfahren und die Vorrichtung ermöglichen es, das trainierte Maschinenlernmodell mit reduziertem Aufwand an verschiedene Einsatzbedingungen anzupassen. Einer der Grundgedanken ist hierbei, dass das trainierte Maschinenlernmodell ein trainiertes Hauptmodell und ein trainiertes Adaptermodell umfasst. Das Hauptmodell ist darauf trainiert, den Hands-Off-Zustand ausgehend von allgemeinen Eingangsdaten zu erkennen. Das Adaptermodell ist darauf trainiert, ausgehend von speziellen Eingangsdaten die allgemeinen Eingangsdaten zu bestimmen. Das Adaptermodell kann daher dazu verwendet werden, spezielle Eingangsdaten derart anzupassen und/oder zu transformieren, dass diese von dem trainierten Hauptmodell verarbeitet werden können. Anders ausgedrückt kann das Adaptermodell in einer (speziellen) Datendomäne liegende spezielle Eingangsdaten aus dieser (speziellen) Datendomäne in eine (allgemeine) Datendomäne des Hauptmodells transformieren. Hierdurch kann das auf die allgemeinen Eingangsdaten, welche insbesondere aus der allgemeinen Datendomäne stammen, trainierte Hauptmodell auch die speziellen Eingangsdaten, die insbesondere aus der speziellen Datendomäne stammen, verarbeiten oder besser verarbeiten. Ein Vorteil ist hierbei, dass das Hauptmodell einmalig mittels eines größeren Trainingsdatensatzes trainiert werden kann, nach dem Trainieren aber nicht mehr verändert werden muss. Um das Hauptmodell auch für spezielle Eingangsdaten der speziellen Datendomäne einsetzen zu können, wird ein geeignetes trainiertes Adaptermodell verwendet, welches dem trainierten Hauptmodell vorgeschaltet ist und welches die speziellen Eingangsdaten der speziellen Datendomäne in die allgemeinen Eingangsdaten, die von dem trainierten Hauptmodell mit höherer Güte verarbeitet werden können, überführt.

Durch das Verfahren und die Vorrichtung kann ein Aufwand beim Trainieren und Bereitstellen des Maschinenlernmodells für verschiedene Einsatzbedingungen reduziert werden. Insbesondere muss das Hauptmodell nur einmalig trainiert werden. Eine Anpassung an andere Einsatzbedingungen, welche mit Eingangsdaten einer geänderten Datendomäne einhergehen, erfolgt dann, insbesondere ausschließlich, über das Adaptermodell, das dem Hauptmodell vorgeschaltet ist.

Eine Lenkungsgröße ist insbesondere eine Größe, welche einen aktuellen Zustand des Lenkrads repräsentiert und/oder beschreibt. Eine Lenkungsgröße ist insbesondere ein Drehmoment, das insbesondere mittels eines Drehmomentsensors am Lenkrad erfasst wird. Grundsätzlich kann eine Lenkungsgröße aber auch eine andere direkt oder indirekt am Lenkrad erfasste Größe sein. Beispielsweise kann vorgesehen sein, einen Strom an einer elektrischen Maschine am Lenkrad zu erfassen und als Lenkungsgröße zu verwenden. Das Erkennen des Hands-Off-Zustands kann ausschließlich ausgehend von der am Lenkrad erfassten Lenkungsgröße, insbesondere einem erfassten Drehmoment, erfolgen. Es ist jedoch insbesondere auch möglich, dass dem Maschinenlernmodell weitere (Lenkungs-)Größen, welche am Lenkrad erfasst werden (z.B. ein Lenkradwinkel und/oder eine Lenkradwinkelgeschwindigkeit etc.) zugeführt werden und das trainierte Maschinenlernmodell den Hands-Off-Zustand unter Berücksichtigung auch dieser weiteren Größe(n) erkennt. Größen, die nicht am Lenkrad erfasst werden, wie beispielsweise eine Fahrzeuggeschwindigkeit, eine Querbeschleunigung, eine Gierrate, Radticks, Dämpferinformationen und/oder sonstige Fahrdynamikgrößen etc., können als Kontextinformation berücksichtigt werden. Insbesondere ist jedoch kein kapazitiv arbeitender Sensor am Lenkrad vorgesehen.

Es kann vorgesehen sein, dass im Rahmen des Erkennens des Hands-Off-Zustands auch ein Hands-On-Zustand erkannt wird.

Ein Hands-Off-Zustand ist insbesondere ein Zustand, in dem keine Berührung des Lenkrads durch den Fahrer erfolgt. Insbesondere ist keiner der Finger des Fahrers in Berührung mit dem Lenkrad. Das Erkennen des Hands-Off-Zustands kann insbesondere das Bereitstellen eines Hands-Off-Zustandssignals umfassen. Dieses umfasst beispielsweise eine Hands-Off-Wahrscheinlichkeit oder kodierte Signale für die Zustände "Hands-Off erkannt" und "Hands-Off nicht erkannt". Ein Hands-On-Zustand ist insbesondere ein Zustand, in dem eine Berührung des Lenkrads durch den Fahrer erfolgt. Es kann auch ein Hands-On/Hands-Off-Zustand bereitgestellt werden, beispielsweise als Hands-On/Hands-Off-Zustandssignal mit insbesondere zumindest zwei Signalzuständen (z.B. "Hands-On erkannt" oder "Hands-Off erkannt"). Grundsätzlich können auch mehr als zwei Kategorien oder Klassen ("Hands-Off' bzw. "Hands-On") unterschieden werden, beispielsweise indem Zwischenstufen unterschieden werden, z.B. eine Berührung mit nur wenigen Fingern im Gegensatz zu einem Umfassen des Lenkrads mit der ganzen Hand, eine Umfassung durch eine Hand, eine Umfassung durch beide Hände usw.

Das Maschinenlernmodell kann insbesondere ein oder mehrere Neuronales Netze umfassen. Das oder die Neuronalen Netze können insbesondere mehrere innere Schichten umfassen. Das Maschinenlernmodell umfasst insbesondere ein künstliches rekurrentes Neuronales Netz, das zu jedem Zeitpunkt t die Eingangsdaten Xₜ verarbeitet und eine Hands-Off-Wahrscheinlichkeit yₜ in [0,1] ausgibt: yₜ= p(xₜ | x_{0:t-1}). Hierbei besitzt das rekurrente Neuronale Netz insbesondere ein sogenanntes Gedächtnis h, in dem Informationen aus vorherigen Zeitschritten abgespeichert sind und das für die Ausgabe beim aktuellen Zeitschritt genutzt werden kann.

Die Ausgangsdaten des trainierten Maschinenlernmodells werden z.B. durch eine Filterung weiterverarbeitet, bevor abnehmende Funktionen (z.B. ein Querführungsassistent) diese verarbeiten. Es kann insbesondere vorgesehen sein, dass ausgehend von einem Vergleich der Hands-Off-Wahrscheinlichkeit mit einem vorgegebenen Schwellwert ein binäres Hands-Off-Signal bereitgestellt wird (mit den beiden Zuständen "Hands-Off erkannt" und "Hands-Off nicht erkannt").

Während einer Trainingsphase wird bzw. wurde das Hauptmodell des Maschinenlernmodells insbesondere in einer allgemeinen Datendomäne mittels einer Vielzahl von Trainingsdaten dieser allgemeinen Datendomäne trainiert, wobei die Trainingsdaten jeweils Paare umfassen, in denen Daten der mindestens einen Lenkungsgröße, insbesondere Drehmomentdaten, mit jeweils einem Hands-Off-Zustand (als Grundwahrheit) gepaart sind. Das Trainieren erfolgt hierbei insbesondere isoliert ohne das vorgeschaltete Adaptermodell. Die Daten der mindestens einen Lenkungsgröße, insbesondere die Drehmomentdaten, sind insbesondere Zeitreihen von der am Lenkrad erfassten mindestens einen Lenkungsgröße, insbesondere Zeitreihen von am Lenkrad erfassten Drehmomenten. Die Trainingsdaten werden insbesondere mit Hilfe von Testfahrten und/oder in Simulatoren für die allgemeine Datendomäne gewonnen. Grundsätzlich kann das Bereitstellen von Trainingsdaten hierbei insbesondere gemäß dem in der DE 10 2019 211 016 A1 beschriebenen Verfahren erfolgen. Das Trainieren erfolgt in an sich bekannter Weise insbesondere im Wege des überwachten Lernens.

Während einer Trainingsphase des Adaptermodells wird das zu trainierende Adaptermodell dem vollständig trainierten Hauptmodell vorgeschaltet. Das Hauptmodell wird fixiert, das heißt, dessen Parameter und/oder Gewichte werden im Rahmen des Trainings des Adaptermodells nicht mehr verändert. Anders ausgedrückt wird mittels des Hauptmodells nur inferiert, ohne dass dieses im Rahmen des Trainings angepasst wird. Ausgehend von Trainingsdaten in einer speziellen Datendomäne wird das Adaptermodell trainiert, wobei die Trainingsdaten jeweils Paare umfassen, in denen Daten der mindestens einen Lenkungsgröße, insbesondere Drehmomentdaten, mit jeweils einem Hands-Off-Zustand (als Grundwahrheit) gepaart sind. Die Trainingsdaten der speziellen Datendomäne können hierbei vom Umfang her sehr viel kleiner sein als die Trainingsdaten, die zum Trainieren des Hauptmodells verwendet wurden. Die Daten der mindestens einen Lenkungsgröße, insbesondere die Drehmomentdaten, sind insbesondere Zeitreihen von der am Lenkrad erfassten mindestens einen Lenkungsgröße, insbesondere Zeitreihen von am Lenkrad erfassten Drehmomenten. Die Trainingsdaten werden insbesondere mit Hilfe von Testfahrten und/oder in Simulatoren für die spezielle Datendomäne gewonnen. Grundsätzlich kann das Bereitstellen von Trainingsdaten hierbei insbesondere gemäß dem in der DE 10 2019 211 016 A1 beschriebenen Verfahren erfolgen. Das Trainieren erfolgt in an sich bekannter Weise insbesondere im Wege des überwachten Lernens. Beim Trainieren schätzt das Adaptermodell ausgehend von den Eingangsdaten eines Trainingsdatums die allgemeinen Eingangsdaten für das trainierte Hauptmodell. Das trainierte Hauptmodell liefert ausgehend hiervon als Ausgangsdaten den Hands-Off-Zustand, der mit der Grundwahrheit des Trainingsdatums verglichen wird. Ausgehend von einer resultierenden Abweichung werden Parameter und/oder Gewichte (nur) des Adaptermodells angepasst.

Eine Ausgabe des Adaptermodells entspricht insbesondere einer Eingabe des Hauptmodells. Anders ausgedrückt sind die Ausgangsdaten des Adaptermodells hinsichtlich einer Struktur und einer Dimension insbesondere gleich den Eingangsdaten des Hauptmodells, das heißt, es gilt insbesondere: |y_{Adapter}| = |X|, wobei y_{Adapter} die Ausgangsdaten des Adaptermodells bezeichnen und X die Eingangsdaten des Hauptmodells.

Teile der Vorrichtung, insbesondere die Datenverarbeitungseinrichtung, können einzeln oder zusammengefasst als eine Kombination von Hardware und Software ausgebildet sein, beispielsweise als Programmcode, der auf einem Mikrocontroller oder Mikroprozessor ausgeführt wird. Es kann jedoch auch vorgesehen sein, dass Teile einzeln oder zusammengefasst als anwendungsspezifische integrierte Schaltung (ASIC) und/oder feldprogrammierbares Gatterfeld (FPGA) ausgebildet sind. Die Datenverarbeitungseinrichtung umfasst insbesondere mindestens eine Recheneinrichtung und mindestens einen Speicher.

In einer Ausführungsform ist vorgesehen, dass das trainierte Adaptermodell in Abhängigkeit von einem Fahrzeugmodell des Fahrzeugs und/oder einem Lenkungsmodell des Fahrzeugs und/oder einer Fahrzeugklasse und/oder mindestens einer Eigenschaft des Fahrzeugs gewählt ist oder gewählt wird. Hierdurch kann das Maschinenlernmodell an das Fahrzeug und hiermit einhergehende Einsatzbedingungen angepasst werden. Da zum Anpassen nur ein geeignetes Adaptermodell gewählt werden muss, kann das Anpassen mit wenig Aufwand erfolgen. Es kann auch vorgesehen sein, dass das Adaptermodell für das Fahrzeugmodell und/oder die Fahrzeugklasse und/oder die mindestens eine Eigenschaft des Fahrzeugs trainiert wird. Das Trainieren des Adaptermodells erfolgt wie voranstehend beschrieben. Wurde das Maschinenlernmodell, das heißt ein Hauptmodell und ein Adaptermodell, beispielsweise für ein Fahrzeugmodell trainiert und eingesetzt, so kann das Maschinenlernmodell für ein anderes Fahrzeugmodell auf einfache Weise angepasst werden, indem das Adaptermodell durch ein geeigneteres trainiertes Adaptermodell ausgetauscht wird. Die mindestens eine Eigenschaft kann beispielsweise eine Fahrzeugplattform und/oder einen Fahrzeughut (z.B. Allrad/Frontantrieb) umfassen.

In einer Ausführungsform ist vorgesehen, dass das trainierte Hauptmodell in hartkodierter Form bereitgestellt wird. Dies ermöglicht eine Lösung, bei der das Hauptmodell schneller und ressourcensparender ausgeführt werden kann. Beispielsweise kann vorgesehen sein, das trainierte Hauptmodell mittels eines ASIC bereitzustellen. Auch die Parameter und Gewichte des trainierten Hauptmodells sind dann insbesondere hartkodiert und können nicht verändert werden. Das Anpassen an die Einsatzbedingungen kann dann mittels eines jeweils geeignet trainierten Adaptermodells erfolgen.

In einer Ausführungsform ist vorgesehen, dass das trainierte Adaptermodell in einem hierfür reservierten beschreibbaren nicht-flüchtigen Speicherbereich hinterlegt wird oder hinterlegt ist. Hierdurch kann die Vorrichtung (z.B. als Teil eines Steuergeräts) für unterschiedliche Einsatzbedingungen, insbesondere unterschiedliche Fahrzeugmodelle, Fahrzeugklassen und/oder Eigenschaften des Fahrzeugs, eingesetzt werden. Beispielsweise kann vorgesehen sein, dass die Vorrichtung ein hartkodiertes trainiertes Hauptmodell aufweist und den für das jeweilige Adaptermodell reservierten beschreibbaren nicht-flüchtigen Speicherbereich. Die Vorrichtung kann dann durch Hinterlegen eines geeignet trainierten Adaptermodells in diesem Speicherbereich für die jeweiligen Einsatzbedingungen eingerichtet werden.

In einer Ausführungsform ist vorgesehen, dass das trainierte Hauptmodell als rekurrentes Neuronales Netz ausgestaltet ist und/oder bereitgestellt wird. Das rekurrente Neuronale Netz kann beispielsweise als Long short-term memory (LSTM) ausgestaltet sein.

In einer Ausführungsform ist vorgesehen, dass das trainierte Adaptermodell als rekurrentes Neuronales Netz ausgestaltet ist und/oder bereitgestellt wird. Hierdurch kann das Anpassen der Domäne von der speziellen Datendomäne auf die allgemeine Datendomäne verbessert erfolgen. Das rekurrente Neuronale Netz kann beispielsweise als Long short-term memory (LSTM) ausgestaltet sein. Grundsätzlich kann das trainierte Adaptermodell aber auch ein Fully-connected-Netzwerk oder ein Faltungsnetz (engl. Convolutional Neuronal Network, CNN) sein.

In einer Ausführungsform ist vorgesehen, dass mindestens eine Kontextinformation erfasst und/oder erhalten wird, wobei die mindestens eine Kontextinformation dem trainierten Adaptermodell als Eingangsdaten zugeführt wird und wobei das trainierte Adaptermodell die mindestens eine Kontextinformation beim Bestimmen der allgemeinen Eingangsdaten berücksichtigt. Hierdurch können zusätzlich auch ein Kontext bzw. eine Kontextinformation berücksichtigt werden. Insbesondere ermöglicht diese Ausführungsform, dass eine Anzahl von Eingängen vergrößert wird, um eine zusätzliche Kontextinformation zu berücksichtigen. Dies ist insbesondere auch möglich, wenn das trainierte Hauptmodell diese zusätzliche Kontextinformation gar nicht berücksichtigt, das heißt, über keinen Eingang für die zusätzliche Kontextinformation verfügt. Ein Kontext bzw. eine Kontextinformation bezeichnet bzw. umfasst insbesondere Eigenschaften einer Situation, in der das Erkennen des Hands-Off-Zustands erfolgen soll und/oder in dem ein oder mehrere Werte der mindestens einen Lenkungsgröße erfasst wurden. Beispiele für Eigenschaften, die einen Kontext bestimmen können, sind: eine Außentemperatur, eine Innentemperatur, eine Lenkradvibration, eine Beladung und/oder ein Gewicht des Fahrzeugs, das Vorhandensein eines Anhängers, das Vorhandensein von Schneeketten, Kopfsteinpflaster, Schlaglöcher, maximale Lenkeingriffe (z.B. Lenkvibration), Bodenschwellen zur Geschwindigkeitsbegrenzung (engl. speed bumps), Eigenschaften (z.B. Identität, Geschlecht, Alter, Gewicht, Handgröße usw.) des Fahrers usw. Der aktuelle Kontext bzw. die mindestens eine Kontextinformation wird insbesondere ausgehend von erfassten Sensordaten erkannt und/oder bestimmt. Hierzu kann mindestens ein Sensor vorgesehen sein, der dazu eingerichtet ist, Sensordaten im Zusammenhang mit dem Kontext zu erfassen. Es kann ferner alternativ oder zusätzlich vorgesehen sein, bei Anwendung derartige Sensordaten über einen CAN-Bus eines Fahrzeugs abzufragen und/oder von Sensoren und/oder einer Fahrzeugsteuerung des Fahrzeugs zu erhalten.

Weitere Merkmale zur Ausgestaltung der Vorrichtung ergeben sich aus der Beschreibung von Ausgestaltungen des Verfahrens. Die Vorteile der Vorrichtung sind hierbei jeweils die gleichen wie bei den Ausgestaltungen des Verfahrens.

Es wird ferner auch ein Lenksystem geschaffen, umfassend eine Vorrichtung nach einer der beschriebenen Ausführungsformen.

Weiter wird auch ein Fahrzeug geschaffen, umfassend ein Lenksystem nach einer der beschriebenen Ausführungsformen und/oder eine Vorrichtung nach einer der beschriebenen Ausführungsformen.

Nachfolgend wird die Erfindung anhand bevorzugter Ausführungsbeispiele unter Bezugnahme auf die Figuren näher erläutert. Hierbei zeigen:
- Fig. 1: eine schematische Darstellung zur Verdeutlichung von Ausführungsformen der Vorrichtung zum Erkennen eines Hands-Off-Zustands an einem Lenkrad;
- Fig. 2: eine schematische Darstellung zur Verdeutlichung des Maschinenlernmodells;
- Fig. 3: eine schematische Darstellung zur Verdeutlichung eines Trainings des Adaptermodells.

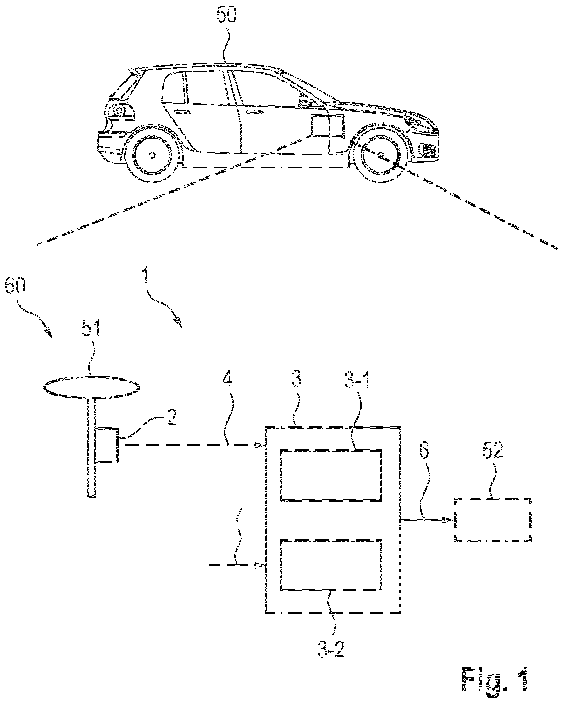

Die Fig. 1 zeigt eine schematische Darstellung einer Ausführungsform der Vorrichtung 1 zum Erkennen eines Hands-Off-Zustands 6 an einem Lenkrad 51. Die Vorrichtung 1 ist insbesondere in einem Fahrzeug 50 angeordnet und dort Teil eines Lenksystems 60. Das in dieser Offenbarung beschriebene Verfahren wird nachfolgend anhand der Vorrichtung 1 verdeutlicht und näher erläutert.

Die Vorrichtung 1 umfasst einen Lenkungsgrößensensor 2 und eine Datenverarbeitungseinrichtung 3. Der Lenkungsgrößensensor 2 ist dazu eingerichtet, eine Lenkungsgröße 4 an dem Lenkrad 51 des Fahrzeugs 50 zu erfassen. Der Lenkungsgrößensensor 2 ist beispielsweise ein Drehmomentsensor und die Lenkungsgröße 4 ein Drehmoment. Grundsätzlich können alternativ oder zusätzlich weitere Lenkungsgrößensensoren vorgesehen sein, die weitere Lenkungsgrößen erfassen.

Die Datenverarbeitungseinrichtung 3 umfasst eine Recheneinrichtung 3-1 und einen Speicher 3-2. Die Recheneinrichtung 3-1 ist dazu eingerichtet, für das Durchführen von Maßnahmen des Verfahrens notwendige Rechenoperationen durchzuführen und kann hierzu auf in dem Speicher 3-2 hinterlegte Daten zugreifen.

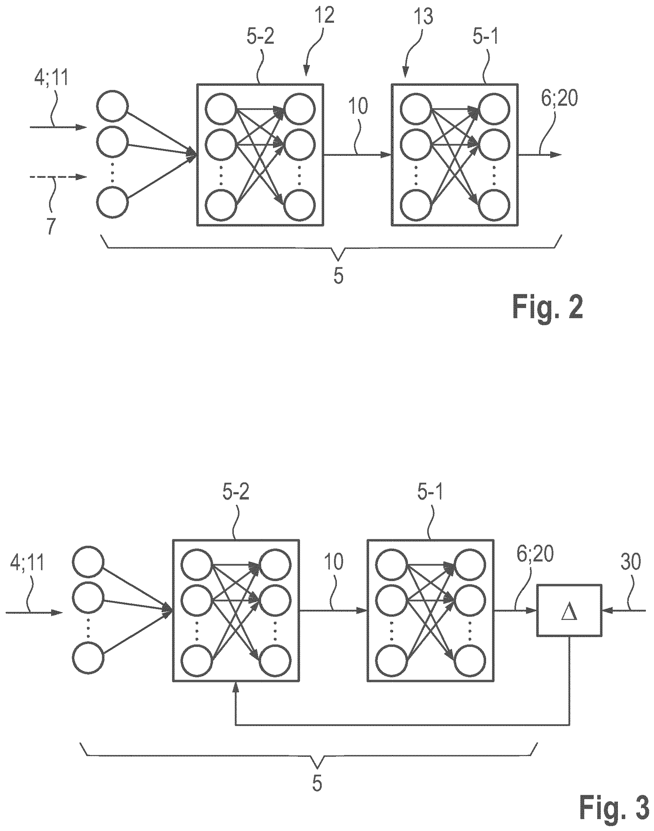

Die Datenverarbeitungseinrichtung 3 ist dazu eingerichtet, die erfasste mindestens eine Lenkungsgröße 4 zu erhalten, ein trainiertes Maschinenlernmodell 5 (vgl. Fig. 2) bereitzustellen und die erfasste mindestens eine Lenkungsgröße 4 dem trainierten Maschinenlernmodell 5 als Eingangsdaten zuzuführen.

Das Maschinenlernmodell 5 ist darauf trainiert, einen Hands-Off-Zustand 6 ausgehend von zumindest der erfassten mindestens einen Lenkungsgröße 4 zu erkennen und eine zugehörige Zustandsinformation als Ausgangsdaten 20 (Fig. 2) auszugeben.

Eine Struktur des trainierten Maschinenlernmodells 5 ist schematisch in der Fig. 2 dargestellt. Das trainierte Maschinenlernmodell 5 umfasst ein trainiertes Hauptmodell 5-1 und ein dem Hauptmodell 5-1 vorgeschaltetes trainiertes Adaptermodell 5-2. Das Hauptmodell 5-1 ist darauf trainiert, ausgehend von allgemeinen Eingangsdaten 10 den Hands-Off-Zustand 6 zu erkennen. Das Adaptermodell 5-2 ist darauf trainiert, ausgehend von speziellen Eingangsdaten 11 die allgemeinen Eingangsdaten 10 zu bestimmen, insbesondere zu schätzen. Anders ausgedrückt werden dem Adaptermodell 5-2 zeitaufgelöste Werte (Zeitreihe) der mindestens einen Lenkungsgröße 4 als spezielle Eingangsdaten 11 zugeführt. Ausgehend hiervon bestimmt das Adaptermodell 5-2 die allgemeinen Eingangsdaten 10, welche dem trainierten Hauptmodell 5-1 zugeführt werden. Eine Ausgangsschicht 12 des trainierten Adaptermodells 5-2 weist hierzu die gleiche Dimension bzw. die gleiche Anzahl von Knoten auf wie eine Eingangsschicht 13 des trainierten Hauptmodells 5-1. Das trainierte Hauptmodell 5-1 erkennt in den allgemeinen Eingangsdaten 10 den Hands-Off-Zustand 6 und gibt eine entsprechende Zustandsinformation als Ausgangsdaten 20 aus.

Der Hands-Off-Zustand 6 wird beispielsweise als Zustandssignal oder Zustandsinformation einem Steuergerät 52 (Fig. 1) des Fahrzeugs 50 zur weiteren Verarbeitung zugeführt. Das Steuergerät 52 kann beispielsweise ein Querführungsassistent oder ein anderes Assistenzsystem sein. Das Zustandssignal oder die Zustandsinformation kann beispielsweise eine Hands-Off-Wahrscheinlichkeit beinhalten oder einen binären Zustandswert mit den beiden Zuständen "Hands-Off erkannt" und "Hands-Off nicht erkannt".

Es kann vorgesehen sein, dass das trainierte Adaptermodell 5-2 in Abhängigkeit von einem Fahrzeugmodell des Fahrzeugs 50 (Fig. 1) und/oder einem Lenkungsmodell des Fahrzeugs 50 und/oder einer Fahrzeugklasse und/oder mindestens einer Eigenschaft des Fahrzeugs 50 gewählt ist oder gewählt wird. Hierdurch kann für konkrete Einsatzbedingungen ein geeignetes Adaptermodell 5-2 gewählt werden.

Es kann vorgesehen sein, dass das trainierte Hauptmodell 5-1 in hartkodierter Form bereitgestellt wird. Beispielsweise kann das Hauptmodell 5-1 nach dem Training als ASIC bereitgestellt werden. Die Vorrichtung 1 weist hierzu einen entsprechenden Speicher 3-2 auf.

Es kann vorgesehen sein, dass das trainierte Adaptermodell 5-2 in einem hierfür reservierten beschreibbaren nicht-flüchtigen Speicherbereich (z.B. im Speicher 3-2) hinterlegt wird oder hinterlegt ist. Hierdurch kann die Vorrichtung 1 (Fig. 1) auch nach der Herstellung für verschiedene Einsatzbedingungen eingerichtet werden. Beispielsweise kann die Vorrichtung 1 Teil eines Steuergeräts sein oder ein Steuergerät ausbilden, welches vor dem Einbau in das Fahrzeug 50 durch Hinterlegen eines auf das Fahrzeug 50 zugeschnittenen Adaptermodells 5-2 in dem Speicherbereich eingerichtet wird.

Es ist insbesondere vorgesehen, dass das trainierte Hauptmodell 5-1 als rekurrentes Neuronales Netz ausgestaltet ist und/oder bereitgestellt wird. Das rekurrente Neuronale Netz kann beispielsweise als Long short-term memory (LSTM) ausgestaltet sein.

Es kann vorgesehen sein, dass das trainierte Adaptermodell 5-2 als rekurrentes Neuronales Netz ausgestaltet ist und/oder bereitgestellt wird. Das rekurrente Neuronale Netz kann beispielsweise als Long short-term memory (LSTM) ausgestaltet sein. Grundsätzlich kann das trainierte Adaptermodell aber auch ein Fully-connected-Netzwerk oder ein Faltungsnetz (engl. Convolutional Neuronal Network, CNN) sein.

Es kann vorgesehen sein, dass mindestens eine Kontextinformation 7 erfasst und/oder erhalten wird, wobei die mindestens eine Kontextinformation 7 dem trainierten Adaptermodell 5-1 als Eingangsdaten 11 zugeführt wird, wobei das trainierte Adaptermodell 5-2 die mindestens eine Kontextinformation 7 beim Bestimmen der allgemeinen Eingangsdaten 10 berücksichtigt.

Die Fig. 3 zeigt eine schematische Darstellung zur Verdeutlichung eines Trainings des Adaptermodells 5-2. Das Training des Adaptermodells 5-2 erfolgt mit bereits vollständig trainiertem Hauptmodell 5-1, das heißt, das Hauptmodell 5-1 wird nur angewendet, dessen Parameter und Gewichte jedoch nicht angepasst. Das Hauptmodell 5-1 ist insbesondere fixiert im Hinblick auf die Parameter und Gewichte. Die Trainingsdaten umfassen spezielle Eingangsdaten, das heißt, insbesondere mindestens eine Lenkungsgröße 4, die aus einer speziellen Datendomäne stammt, auf die das Adaptermodell 5-2 trainiert werden soll. Zu jedem Trainingsdatum existiert, gepaart mit der mindestens einen Lenkungsgröße 4, jeweils eine Grundwahrheit 30, die den real vorliegenden Hands-Off-Zustand 6 beinhaltet. Die mindestens eine Lenkungsgröße 4 wird dem (noch untrainierten) Adaptermodell 5-2 zugeführt. Ausgehend hiervon bestimmt (schätzt) das Adaptermodell 5-2 allgemeine Eingangsdaten 10, die dem trainierten Hauptmodell 5-1 zugeführt werden. Von den allgemeinen Eingangsdaten 10 ausgehend erkennt (schätzt) das trainierte Hauptmodell 5-1 den Hands-Off-Zustand 6 und gibt diesen aus. Der Hands-Off-Zustand 6 wird mit der Grundwahrheit 30 verglichen und ausgehend von einer resultierenden Abweichung Δ werden durch Backpropagation Parameter und Gewichte des Adaptermodells 5-2 angepasst. Dies wird solange mit weiteren Trainingsdaten wiederholt, bis die Abweichung Δ einen vorgegebenen (Güte-)Schwellwert unterschreitet. Anschließend kann das trainierte Maschinenlernmodell 5 verwendet werden, um in einem Fahrzeug 50 (Fig. 1) den Hands-Off-Zustand 6 zu erkennen. Insbesondere kann hierzu in einer bereits vorbereiteten Vorrichtung 1 (z.B. als Teil eines Steuergeräts) nur das Adaptermodell 5-2 in einen hierfür reservierten Speicher 3-2 geladen werden, wobei das trainierte Hauptmodell 5-1 bereits in dem Speicher 3-2 oder einem hartkodierten Speicher hinterlegt ist, wie dies voranstehend bereits beschrieben wurde.

### Bezugszeichenliste

- 1: Vorrichtung
- 2: Lenkungsgrößensensor
- 3: Datenverarbeitungseinrichtung
- 3-1: Recheneinrichtung
- 3-2: Speicher
- 4: Lenkungsgröße
- 5: trainiertes Maschinenlernmodell
- 5-1: trainiertes Hauptmodell
- 5-2: trainiertes Adaptermodell
- 6: Hands-Off-Zustand
- 7: Kontextinformation
- 10: allgemeine Eingangsdaten
- 11: spezielle Eingangsdaten
- 12: Ausgangsschicht
- 13: Eingangsschicht
- 20: Ausgangsdaten
- 30: Grundwahrheit
- 50: Fahrzeug
- 51: Lenkrad
- 52: Steuergerät
- 60: Lenksystem
- Δ: Abweichung

## Patentansprüche

1. Verfahren zum Erkennen eines Hands-Off-Zustands (6) an einem Lenkrad (51) eines Fahrzeugs (50),
wobei mindestens eine Lenkungsgröße (4) an dem Lenkrad (51) erfasst wird,
wobei die erfasste mindestens eine Lenkungsgröße (4) einem trainierten Maschinenlernmodell (5) als Eingangsdaten zugeführt wird, wobei das Maschinenlernmodell (5) darauf trainiert ist, einen Hands-Off-Zustand (6) ausgehend von zumindest der erfassten mindestens einen Lenkungsgröße (4) zu erkennen und eine zugehörige Zustandsgröße als Ausgangsdaten (20) auszugeben,
wobei das trainierte Maschinenlernmodell (5) ein trainiertes Hauptmodell (5-1) und ein dem Hauptmodell (5-1) vorgeschaltetes trainiertes Adaptermodell (5-2) umfasst,
wobei das Hauptmodell (5-1) darauf trainiert ist, ausgehend von allgemeinen Eingangsdaten (10) den Hands-Off-Zustand (6) zu erkennen, und
wobei das Adaptermodell (5-2) darauf trainiert ist, ausgehend von speziellen Eingangsdaten (11) die allgemeinen Eingangsdaten (10) zu bestimmen.

2. Verfahren nach Anspruch 1, **dadurch gekennzeichnet, dass** das trainierte Adaptermodell (5-2) in Abhängigkeit von einem Fahrzeugmodell des Fahrzeugs (50) und/oder einem Lenkungsmodell des Fahrzeugs (50) und/oder einer Fahrzeugklasse und/oder mindestens einer Eigenschaft des Fahrzeugs (50) gewählt ist oder gewählt wird.

3. Verfahren nach Anspruch 1 oder 2, **dadurch gekennzeichnet, dass** das trainierte Hauptmodell (5-1) in hartkodierter Form bereitgestellt wird.

4. Verfahren nach einem der vorangegangenen Ansprüche, **dadurch gekennzeichnet, dass** das trainierte Adaptermodell (5-2) in einem hierfür reservierten beschreibbaren nicht-flüchtigen Speicherbereich hinterlegt wird oder hinterlegt ist.

5. Verfahren nach einem der vorangegangenen Ansprüche, **dadurch gekennzeichnet, dass** das trainierte Hauptmodell (5-1) als rekurrentes Neuronales Netz ausgestaltet ist und/oder bereitgestellt wird.

6. Verfahren nach einem der vorangegangenen Ansprüche, **dadurch gekennzeichnet, dass** das trainierte Adaptermodell (5-2) als rekurrentes Neuronales Netz ausgestaltet ist und/oder bereitgestellt wird.

7. Verfahren nach einem der vorangegangenen Ansprüche, **dadurch gekennzeichnet, dass** mindestens eine Kontextinformation (7) erfasst und/oder erhalten wird, wobei die mindestens eine Kontextinformation (7) dem trainierten Adaptermodell (5-2) als Eingangsdaten (11) zugeführt wird und wobei das trainierte Adaptermodell (5-2) die mindestens eine Kontextinformation (7) beim Bestimmen der allgemeinen Eingangsdaten (10) berücksichtigt.

8. Vorrichtung (1) zum Erkennen eines Hands-Off-Zustands (6) an einem Lenkrad (51), umfassend:
mindestens einen Lenkungsgrößensensor (2), der eingerichtet ist zum Erfassen von mindestens einer Lenkungsgröße (4) an dem Lenkrad (51), und
eine Datenverarbeitungseinrichtung (3), wobei die Datenverarbeitungseinrichtung (3) dazu eingerichtet ist, die erfasste mindestens eine Lenkungsgröße (4) zu erhalten, ein trainiertes Maschinenlernmodell (5) bereitzustellen und die erfasste mindestens eine Lenkungsgröße (4) dem trainierten Maschinenlernmodell (5) als Eingangsdaten zuzuführen, wobei das Maschinenlernmodell (5) darauf trainiert ist, einen Hands-Off-Zustand (6) ausgehend von zumindest der erfassten mindestens einen Lenkungsgröße (4) zu erkennen und eine zugehörige Zustandsinformation als Ausgangsdaten (20) auszugeben, wobei das trainierte Maschinenlernmodell (5) ein trainiertes Hauptmodell (5-1) und ein dem Hauptmodell (5-1) vorgeschaltetes trainiertes Adaptermodell (5-2) umfasst,
wobei das Hauptmodell (5-1) darauf trainiert ist, ausgehend von allgemeinen Eingangsdaten (10) den Hands-Off-Zustand (6) zu erkennen, und
wobei das Adaptermodell (5-2) darauf trainiert ist, ausgehend von speziellen Eingangsdaten (11) die allgemeinen Eingangsdaten (10) zu bestimmen.

9. Lenksystem (60), umfassend eine Vorrichtung (1) nach Anspruch 8.

10. Fahrzeug (50), umfassend ein Lenksystem (60) nach Anspruch 9 und/oder eine Vorrichtung (1) nach Anspruch 8.
